# EUROPEAN PATENT APPLICATION

(11) **EP 1 632 546 A1**
(43) Date of publication of application: **08.03.2006**
(21) Application number: 04729336.0
(22) Date of filing: 23.04.2004
(51) Int. Cl.: C10G 1/10, C10G 35/04, C10B 53/00, C08J 11/20

(54) **METHOD FOR RECYCLING RUBBER-CONTAINING WASTES**

(30) Priority: 24.04.2003 RU 2003111988
(71) Applicant: Obschestvo S Ogranichennoy Otvetstvennostyu "N.T.D. Tamanno", Moscow, 111020 (RU)
(72) Inventor: BOCHAVER, Kirill Zyskovich, Moscow, 111250 (RU)
(74) Representative: Gritschneder, Martin
(86) International application number: PCT/RU2004/000153
(87) International publication number: WO 2004/094562

(57) **Abstract**

The inventive method includes thermal liquefaction of wastes in an organic solvent at a temperature above 270°C and a pressure up to 6 MPa. The liquid fraction is separated from the undissolved product. The liquid fraction is distilled into the fraction with the boiling temperature below 220°C and the fraction with the boiling temperature above 220°C. Alkyl benzene or the gasoline fraction with a boiling temperature below 220°C is used as an organic solvent at the start-up of the process. Thermal liquefaction of a batch of wastes is carried out in an organic solvent at a temperature from 280°C to 435°C and a pressure at least 2.9 MPa, the organic solvent-waste weight ratio being more than 1.0. The liquid fraction with the boiling temperature below 220°C is subjected to catalytic reforming. A part of the liquid fraction, as subjected to catalytic reforming, with the boiling temperature below 220°C is used as the target product, and the remaining part of the liquid fraction, as subjected to catalytic reforming, with the boiling temperature below 220°C is used as a solvent and returned for thermal liquefaction of a new batch of wastes at a temperature from 280°C to 435°C and a pressure at least 2.9 MPa, the solvent-waste weight ratio being more than 1.0. The process of thermal liquefaction is continued in the said conditions of thermal liquefaction and catalytic reforming for the next and subsequent batches of wastes, while a part of the liquid fraction, as subjected to catalytic reforming, with the boiling temperature below 220°C being returned for thermal liquefaction.

## Description

### Field of the Invention

This invention relates to disposal in the chemical industry of organic industrial and household rubber wastes and their processing into motor fuel and chemical stock to be further used as a boiler fuel, a bituminous-like binder or stock for production thereof, technical carbon or stock for production thereof, for electric arc furnaces, electrolysis baths, carbon-carbonic materials (CCM) for metallurgy, etc, as well as a small quantity of hydrocarbon gas which may be used as a fuel.

### Prior Art

The problem of chemical processing of various organic industrial and household polymeric wastes is very actual due to continuous increase in their quantities and pollution of the environment.

Removal of this problem will enable to solve the ecological task of complex and harmless disposal of rubber-containing industrial and household wastes, expand the base of hydrocarbon stock produced from oil, coals, shale coals, natural bitumen.

A method for recycling rubber-containing waste into motor fuel and chemical stock is known, which includes thermal liquefaction (thermolysis) of wastes in a hydrocarbon solvent at an elevated pressure (International Application WO 95/20007, C08J 11/20, published on 27.07.1995).

As the hydrocarbon solvent the said method uses wastes of the synthetic rubber production, which are taken with source rubber-containing waste in the weight ratio of 2 - 4:1, respectively, and the thermal liquefaction process is carried out at a temperature from 270 to 420°C and a pressure from 1 to 6 MPa.

Furthermore, an embodiment of the method provides for partial return to the process the liquid fraction obtained after distillation, having the boiling temperature above 200°C, as an additive to the initial hydrocarbon solvent in the weight ratio of 1 - 5:10, respectively, and the remaining part of the said fraction is separated as the target product.

An advantage of the said method is its simplified technology and an increase in the yield of the light fractions having the boiling temperature under 200°C.

A limitation of the said method is the use of wastes from the synthetic rubber production, since such wastes are not always available in the required quantity.

A method for recycling organic polymeric wastes is also known, which includes the thermal liquefaction of wastes at a temperature above 270°C and an elevated pressure in at least one solvent, namely alkyl benzene, the separation of the liquid fraction with its subsequent distillation (RF Patent No. 2167168, C08J 11/04, published on 20.05.2001).

The said method uses, while thermally liquefying wastes, an elevated pressure not lower than 6.1 MPa, and, after being distilled, the liquid fraction with a boiling temperature at least 210°C is introduced as an additional component of the solvent in the weight ratio not less than 1:1 at thermally liquefying new wastes.

In the embodiments of the method the solvent-waste weight ratio is selected in the range from 1:1 to 4.2:1. Moreover, after being distilled, the liquid fraction having the boiling temperature not less than 210°C is introduced as an additional component of the solvent in the weight ratio at least 5:1.

An advantage of the said method is the use of alkyl benzene as an organic solvent.

A limitation of the said method is its high energy intensity due to using, as a part of the solvent, the liquid fraction with the boiling temperature not less than 210°C, and high operation pressures exceeding 6.1 MPa.

The closest method is a method of processing organic polymeric wastes, including rubber-containing ones, comprising, when started up in a reactor, the thermal liquefaction of wastes in an organic solvent, namely alkyl benzene, at a temperature above 270°C and a pressure up to 6 MPa, the separation of the liquid fraction from the unsolved product, the distillation of the liquid fraction into a fraction having the boiling temperature below 220°C and a fraction having the boiling temperature above 220°C (RF Patent No. 2110535, C08J 11/04, published on 10.05.1998).

According to the above method the thermal liquefaction of wastes is carried out at a temperature from 270°C to 420°C and at a pressure from 1 MPa to 6 MPa with the solvent-waste weight ratio 2 - 4:1, respectively, in the presence of a rare-earth metal or intermetallics based on rare-earth metals or in the presence of titanium hydride, which are taken in the amount of 0.5% to 10% of the reaction mixture weight, alkyl benzene, e.g., toluene, xylene, dimethyl-trimethyl-tetramethyl benzene or mixtures thereof, is used as the solvent, or the product of distilling "raw benzene" produced by high-temperature coking of black coals is used as the solvent, which enables to accelerate the process of processing wastes and increase the yield of liquid products, as well as the latter's content of fractions having the boiling temperature below 200°C. Thus, the said method enables to increase the rate of conversion of rubber-containing and other organic wastes.

Some limitations of the said method are:
- for efficient thermal liquefaction (thermolysis) the process is carried out in the presence of a rare-earth metal or intermetallics based on rare-earth metals or in the presence which are taken in the amount of 0.5% to 10% of the reaction mixture weight, which complicates the production process, and, moreover, removal of these additional catalysts and additives from the resulting valuable target product, namely, technical carbon, is very complicated;
- low quality of technical carbon due to big amounts of ash materials, which is a consequence of using additives together with a solvent;
- a high consumption rate of a solvent when producing a high-quality gasoline fraction.

### Summary of the Invention

This invention is based on the task of creating a method for recycling rubber-containing wastes, which would enable to accelerate the process and simplify the technology, improve the process productivity as to the yield of a high-octane gasoline fraction and to produce technical carbon as a commercial product, and, thus, lower the power intensity, expand the functional capabilities and raise the quality of the products while lowering the operating costs.

In order to solve the stated task, while carrying out the said known method for recycling rubber-containing wastes, including thermal liquefaction of wastes fed into a reactor containing an organic solvent at a temperature above 270°C and a pressure up to 6 MPa, separation the liquid fraction from the undissolved product, distillation (in the process of thermal liquefaction) of the liquid fraction into the fraction with the boiling temperature below 220°C and the fraction with the boiling temperature above 220°C, according to the invention, after feeding in a reactor a batch of wastes and an organic solvent, thermal liquefaction is carried out at a temperature of 280°C and a pressure at least 2.9 MPa, the organic solvent-waste weight ratio being more than 1.0, the liquid fraction with the boiling temperature below 220°C is subjected to catalytic reforming, a part of the liquid fraction, as subjected to catalytic reforming, with the boiling temperature below 220°C is used as the target product, and the remaining part of the liquid fraction, as subjected to catalytic reforming, with the boiling temperature below 220°C is used as a solvent and returned for thermal liquefaction of a new batch of wastes at a temperature of 280°C and a pressure at least 2.9 MPa, the solvent-waste weight ratio being more than 1.0, the liquid fraction, as obtained from the new batch of wastes, with the boiling temperature below 220°C is subjected to catalytic reforming, a part of the liquid fraction, as subjected to catalytic reforming, with the boiling temperature below 220°C is used as the target product, and the remaining part of the liquid fraction, as subjected to catalytic reforming, with the boiling temperature below 220°C is once again returned for thermal liquefaction of a new batch of wastes, the process is continued in the said conditions of thermal liquefaction and catalytic reforming for the next and subsequent batches of wastes, while a part of the liquid fraction, as subjected to catalytic reforming, with the boiling temperature below 220°C being returned for thermal liquefaction of subsequent batches of wastes.

Several additional embodiments of the inventive method are possible, where it is expedient that:
- alkyl benzene and/or the gasoline fraction with a boiling temperature below 220°C is used as an organic solvent;
- a part of the liquid fraction, as subjected to catalytic reforming, with the boiling temperature below 220°C is once again returned for thermal liquefaction of a new batch of wastes at a pressure in the range from at least 2.9 MPa to not more than 5 MPa, the solvent-waste weight ratio being in the range from more than 1.0 to not more than 3.0.

The process of thermal liquefaction of rubber-containing wastes according to the inventive method yields the following target products:
- a small amount of hydrocarbon gases (2.0 - 5.3 % by wt.);
- the fraction of light hydrocarbons boiling out at a temperature from 60°C to 220°C;
- the fraction of heavy hydrocarbons boiling out at a temperature above 220°C;
- powder technical carbon.

The light fraction of liquid hydrocarbons with a boiling temperature below 220°C is a mixture of hydrocarbons from the solvent and those produced from rubber by thermolysis and is a low-viscosity (gasoline viscosity) liquid of light-yellowish color having the odor of aromatics and unsaturated hydrocarbons, which is usually distilled in the temperature range from 60°C to 220°C. The concentration of aromatics - benzene and alkyl benzenes - is app. 60 wt. % (see Table 1, Column 2).

The heavy fraction of liquid hydrocarbons, which is obtained after thermal liquefaction (thermolysis) of rubber, has a small (not more than 5 wt. %) addition of the light-fraction hydrocarbons and is a black viscous (light-oil consistence) liquid with the pour point in the range from 0°C to +5°C.

Technical carbon - a product of rubber thermolysis - is a light dusty loose powder of black color.

As it is known from analogous solutions, the active part of thermal liquefaction (thermolysis, thermal solubilization) is alkyl benzene (or a mixture of alkyl benzenes). Therefore, it is expedient to raise the aromatics concentration in the solvent in order to activate the process of thermolysis.

This can be achieved after separating the liquid fraction from the undissolved product and distilling the liquid fraction directly during its thermal liquefaction by reforming the thermolysis light fraction vapors having a boiling temperature below 220°C.

For this purpose the light fraction of liquid hydrocarbons (products of thermal liquefaction) is subjected to reforming, e.g., in a stationary layer of the high-siliceous zeolite (of ZSM-5 type, promoted with 2% of ZnO), at a temperature from 440°C to 520°C (see, for example, RF Patent No. 2130960). Other known methods of producing high-octane gasoline fractions and aromatic hydrocarbons may be also used for reforming (see, for example, RF Patent No. 2039790).

Thus, in contrast to known methods, the process of waste thermal liquefaction is carried out with the use of an organic solvent produced by the very thermal liquefaction process, wherein, for the purpose of activating subsequent batches of wastes, the light fraction with a boiling temperature below 220°C, which is produced in a thermal liquefaction reactor in the result of distillation, is subjected to reforming before using it as the organic solvent for thermal liquefaction of the next batch of wastes. Thus, the need in a deficit organic solvent for thermal liquefaction of subsequent batches of wastes, as well as in other thermolysis activators, e.g., rare-earth metals, intermetallics, titanium hydride, etc., is eliminated completely.

The balancing liquid product, which is accumulated during the circulation of the liquid hydrocarbon light fraction through the processes of reforming and thermal liquefaction, is the highly aromatic, isomerized and, therefore, high-octane and low-sulfur component of motor gasoline. A part of this target product is taken off and used for its purpose when excess quantities are accumulated. The remaining part of the liquid fraction, as subjected to catalytic reforming, with a boiling temperature below 220°C is returned for thermal liquefaction of the next batch of wastes.

The above advantages as well as the specific features of carrying out the inventive method are explained by its preferred embodiment with references to the appended drawings.

### Brief Description of the Drawings

FIG. 1 shows the process flow-chart of a plant for implementing the inventive method;
FIG. 2 is a functional block diagram of the pilot plant that has been used for determining operation modes.

### Description of a Preferred Embodiment

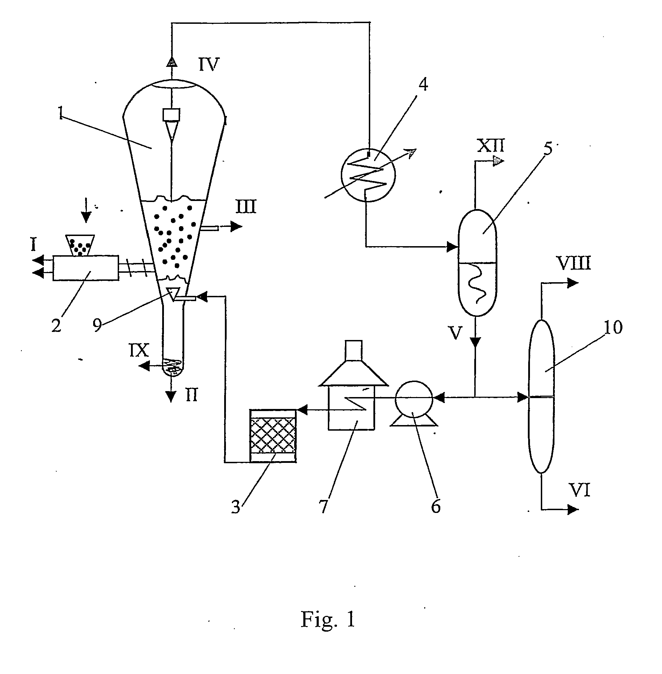

FIG. 1 schematically shows: a thermolysis reactor 1, a unit 2 for preparation and feeding of rubber-containing wastes, a reforming reactor 3, a cooler-condenser 4, a gas-liquid separator 5, a pump 6, a pipe furnace 7, a distributive device 9, a rectifying column 10.

The production process of thermal liquefaction (thermolysis) of rubber-containing wastes begins with waste preparation, e.g., worn tires. Rubber-containing wastes are washed, milled and separated from the slime I (steel cord, textile, dirt) in the unit 2 and afterwards are fed into the reactor 1 (conical) with a fluidized bed of rubber crumb and technical carbon in a solvent, which are is a state close to pseudocritical.

Thermolysis of rubber and its conversion to the thermolysis products is carried out in the pseudo-fluidized bed of the solvent:
II - liquid heavy hydrocarbons having a boiling temperature above 220°C;
III - powder technical carbon removed from the reactor 1 with the use of pneumatic means of transportation;
IV - the gas-vapor fraction of light hydrocarbons with a boiling temperature below 220°C.

The flow IV is cooled and partially condensed in the cooler-condenser 4, and separated in the gas-liquid separator 5. The liquid light hydrocarbons fraction V (LHF) is fed by the pump 6 to the pipe furnace 7 (with flame heating) where it is heated to the temperature necessary for carrying out reforming in the reactor 3. If, for example, a stationary layer of a reforming catalyst containing ZSM-5-type zeolite is used, which is promoted with 2% ZnO (see, for example, RF PatentNo. 2130960), then LHF V is heated in the pipe furnace 7 to a temperature app. 500°C, and the LHF temperature after reforming is app. 450°C.

Then the product of reforming is fed to the distributive device 9 of the reactor 1 for using as an organic solvent.

The balancing part of LHF is taken from the circulating flow and fed to the rectifying column 10 for stabilization in order to produce the motor gasoline fraction VI, the separation gas fraction VII and the stabilization fraction VIII (is used as a fuel in the pipe furnace 7). The remains of steel cord IX are removed together with the liquid heavy hydrocarbons II having a boiling temperature above 220°C from the reactor 1.

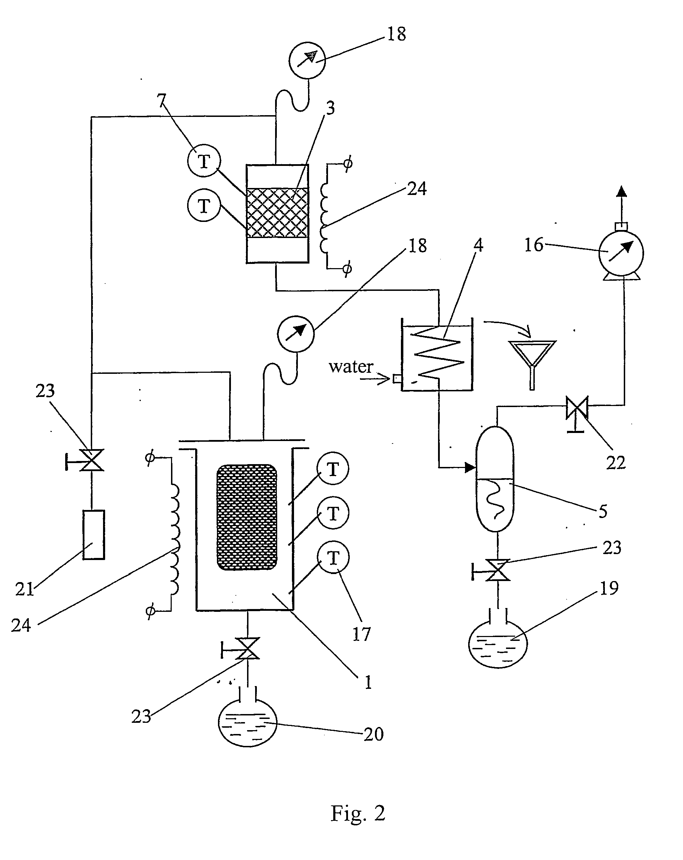

FIG. 2 schematically shows: a thermolysis reactor 1 (electrically heated, sealed) with a bag made of a glass cloth or a carbon fiber cloth for rubber crumb or bigger fragments of tires, a reforming reactor 3 with a zeolite-containing catalyst, a cooler-condenser 4 (water) of thermolysis product vapors, a gas-liquid separator 5, a gas meter 16, thermometers 17, pressure gages 18, a metering reservoir 19 for the light fraction of liquid hydrocarbons, a metering reservoir 20 for the heavy fraction of the products, a sampler 21, an adjusted valve 22, stop valves 23, electric heaters 24.

The experiments have been carried out in the following sequence:

Fragments of tires or crumb of rubber-containing wastes are put in the 12 L bag of the reactor 1. A solvent is fed into the reactor 1. The inner space of the reactor 1 is heated to a temperature in the range from 280°C to 350°C, holding the pressure at the level 2.5 to 5.0 MPa. Afterwards the temperature is raised due to the exothermic reaction of thermal liquefaction (thermolysis). Depending on the weight ratio of wastes and an organic solvent (initial) (or a solvent when using the liquid light hydrocarbon fraction as the subsequent solvent) the temperature is raised to the level from 330°C to 500°C. Due to expansion and vaporization of the solvent and formation of a hydrocarbon gas the pressure is raised to 2.5 - 5.0 MPa and is held at the set level from 2.5 to 5.0 MPa by removing a part of the organic solvent vapor and gas through the reforming reactor 3, the cooler-condenser 4, the gas-liquid separator 5 and the valve 22. The quantity of the hydrocarbon gas is metered with the gas meter 16. The temperature and the pressure in the reactors 1 and 3 is registered by the thermometers 17 and the pressure gages 18.

When the temperature in the reactor 1 stops increasing, it means that the process of thermal liquefaction (thermolysis) is completed. After holding for 15 minutes the pressure in the plant is lowered to the atmospheric pressure. During the whole experiment the gas meter 16 registers the quantity of the non-condensed gas ― a product of thermolysis. The liquid product (the low-boiling light liquid fraction (LB) - 220°C) from the gas-liquid separator 5 is drained to the metering reservoir 19. After the reactor 1 is cooled, it is depressurized, technical carbon, as contained in the bag, is removed and weighed. The heavy fraction of liquid hydrocarbons is drained to the metering reservoir 20. the reaction products from the metering reservoirs 19 and 20 and the sampler 21 are analyzed for determining their composition. A part of the LB-220°C fraction, as subjected to reforming, is used as the solvent for the next experiment. Thus, the next thermal liquefaction is carried out at the expense of the solvent (the light fraction subjected to reforming) obtained from the previous experiment. The solvent reforming results are given in Table 1, third column.

The results of the experiments carried out for the purpose of determining the thermal liquefaction modes are summarized in Table 2.

The said Table gives a possibility of assessing the influence of the solvent-rubber weight ratio, temperature, pressure of the process and the composition of the solvent on the quality and yield of the products:
- the solvent-rubber weight ratio equal to 0.774 resulted in caking of technical carbon due to the process development at a high temperature being the result of the reaction exothermic heat at a low heat capacity of the thermolysis products and lack of solvent for carrying out the subsequent thermal liquefaction (Table 2, Experiment 1);
- the solvent-rubber weight ratio equal to 0.93 (Table 2, Experiment 2) resulted in the yield of the high-quality target products, but, in practice, the quantity of the light fraction is sufficient only for obtaining the solvent for the subsequent thermal liquefaction, and a very small part of the target product - the gasoline fraction with a boiling temperature below 220°C - can be obtained. The experiment showed that there is no possibility to obtain even a ponderable part of the target product - the high-octane gasoline fraction; therefore it is expedient to use the solvent-rubber weight ratio more than 1.0;
- an increase in the solvent-rubber weight ratio up to 3.0 (Table 2, Experiment 8) results in an increase of the power consumption due to the necessity to support the circulation of a great quantity of the solvent, expand the volumes of the reactors 1 and 3, both thermolysis itself and the reforming process; therefore the weight ratio more than 3 is not profitable;
- at the temperature of 260°C and lower (Experiment 12) as well as at the pressure of 2.5 MPa and lower (Table 2, Experiments 5 and 11) the thermal liquefaction reaction can not be carried out since rubber swells in the solvent, but not dissolves;
- when using a solvent, which is not subjected to reforming at the stage of returning the light fraction for thermal liquefaction, losses are increased greatly (Table 2, Experiment 13).

Table 1 shows the chromatographic analysis results of the light fraction of the products obtained after thermal liquefaction of rubber before reforming (Table 1, Column 2) and after it (Table 1, Column 3). The active alkyl benzenes content is, respectively, 60% and 80% by weight. Reforming converts paraffin, naphthenic and unsaturated hydrocarbons into aromatic compounds (alkyl benzenes).

The experiment results, as shown in Table 2, confirm a high efficiency of the rubber thermal liquefaction (thermolysis) at a temperature from 280°C to 435°C and a pressure not less than 2.9-5 MPa, which corresponds to parameters close to critical for a mixture of hydrocarbons of the thermolysis light liquid fraction with the boiling temperature range from LB to 220°C. As it can be seen from Table 2, it is not expedient to raise the pressure above 5 MPa, since it does not lead to an increase in the yield of the target product and results in excess energy consumption.

For reference: the critical parameters of alkyl benzenes:
- toluene: P_{cr} = 4.0 MPa, t_{cr} = 320.8°C;
- metaxylene: P_{cr}= 3.5 MPa, t_{cr} = 346.0°C;
- ethyl benzene: P_{cr} = 3.7 MPa, t_{cr} = 346.4°C, etc.

The process of thermal liquefaction is started with the use of an organic solvent, e.g., any technical alkyl benzene or a mixture of alkyl benzenes having a boiling temperature below 220°C. If alkyl benzenes are unavailable, it is possible to use any gasoline fraction having a boiling temperature below 220°C. Several cycles of thermal liquefaction are carried out in order to stabilize the composition of the solvent for subsequent operations due to forming new portions of the solvent and gradual transfer of the initial organic solvent to the taken-off (excess) part of the light fraction.

If the quantity of alkyl benzene is limited and insufficient for forming the initial volume of an organic solvent, then, as the studies have showed, it may be supplemented with any straight-run gasoline. Thus, for the start-up of the process a straight-run gasoline containing 14% of aromatic hydrocarbons has been used. After its multiple circulations in the plant (see Fig. 1) the alkyl benzenes content of it has increased and stabilized at the level of 80%. In another case for the start-up of the process a mixture of toluene and a straight-run gasoline has been used. After its multiple circulations the alkyl benzenes content has also increased to 80%.

### Industrial Applicability

The inventive method for recycling rubber wastes may be most satisfactorily used for chemical processing of various rubber materials, primarily tires, into motor fuel and chemical stock.

**Table 1 Group Composition of the Fraction 60-220°C**

| **Hydrocarbons** | **After Reactor 1,** | **After Reactor 3,** |
|---|---|---|
| | **wt. %** | **wt. %** |
| Aromatic hydrocarbons | 60.3 | 77.4 |
| (alkyl benzenes) | | |
| Olefins | 8.2 | 2.5 |
| Naphthenes | 11.4 | 3.8 |
| Diene hydrocarbons | 0.3 | 0.0 |
| H-paraffins | 11.0 | 7.1 |
| Iso-paraffins | 8.6 | 8.9 |
| Undecoded hydrocarbons | 0.2 | 0.3 |
| **Total** | 100 | 100 |

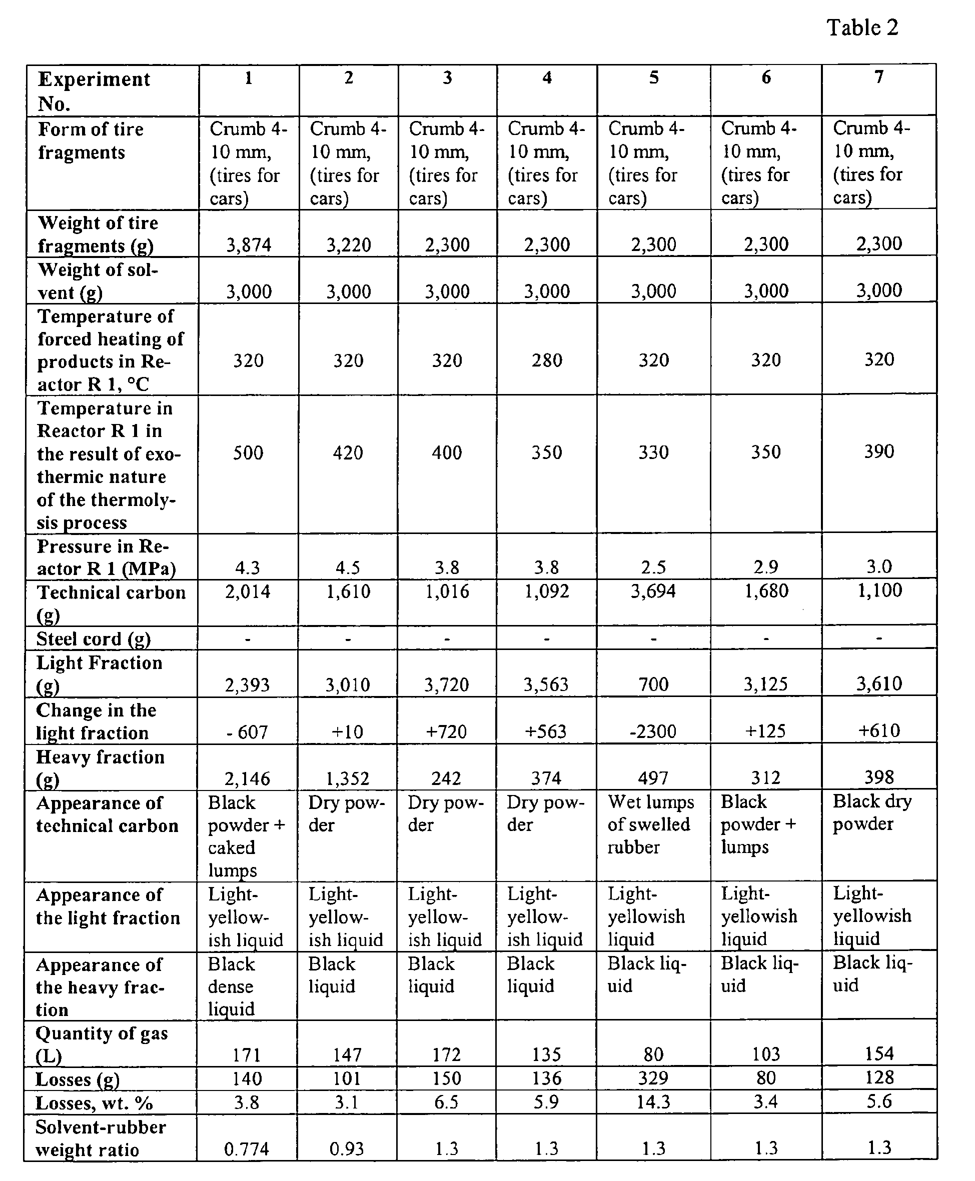

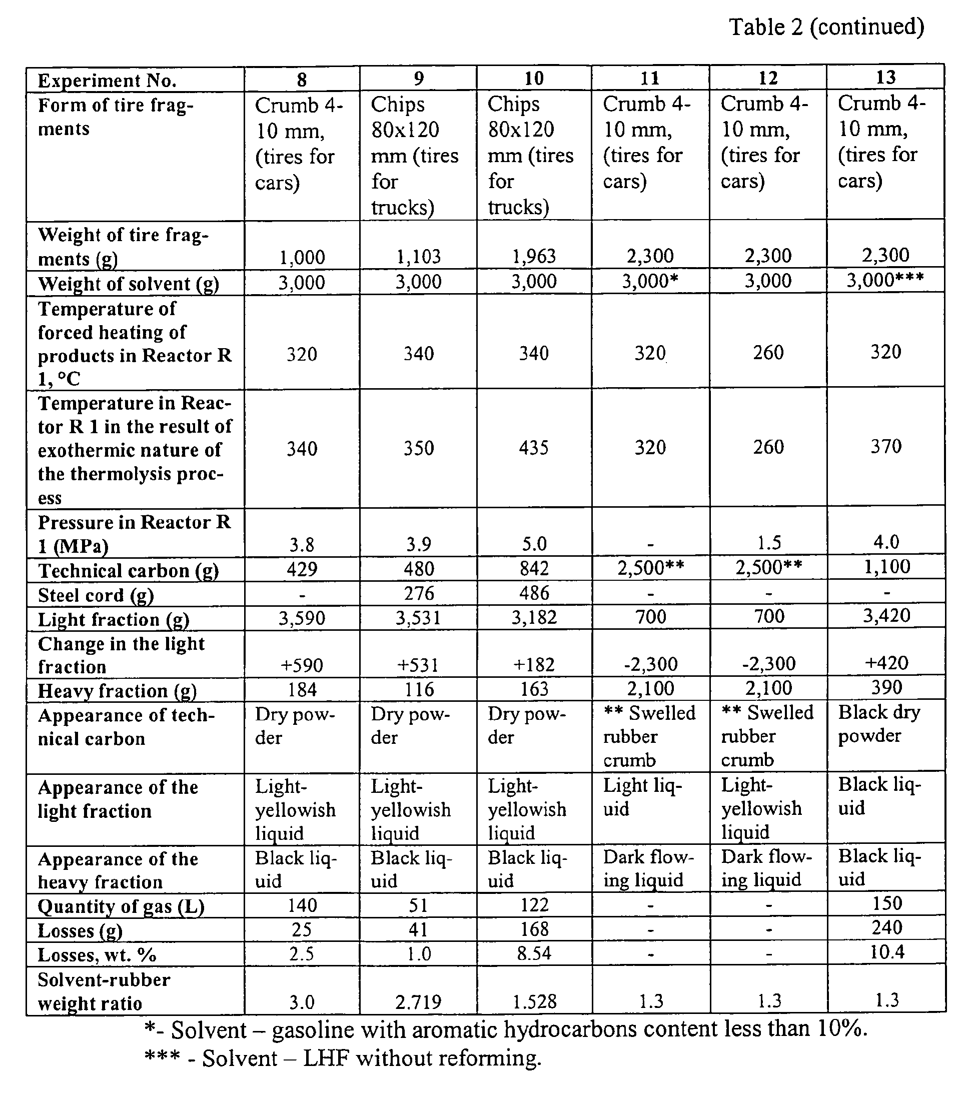

## Claims

1. A method for recycling rubber-containing wastes, including thermal liquefaction of wastes fed into a reactor containing an organic solvent at a temperature above 270°C and a pressure up to 6 MPa, separation the liquid fraction from the undissolved product, distillation of the liquid fraction into the fraction with the boiling temperature below 220°C and the fraction with the boiling temperature above 220°C, **characterized in that** after feeding in a reactor a batch of wastes and an organic solvent thermal liquefaction is carried out at a temperature from 280°C to 435°C and a pressure at least 2.9 MPa, the organic solvent-waste weight ratio being more than 1.0, the liquid fraction with the boiling temperature below 220°C is subjected to catalytic reforming, a part of the liquid fraction, as subjected to catalytic reforming, with the boiling temperature below 220°C is used as the target product, and the remaining part of the liquid fraction, as subjected to catalytic reforming, with the boiling temperature below 220°C is used as a solvent and returned for thermal liquefaction of a new batch of wastes at a temperature of from 280°C to 435°C and a pressure at least 2.9 MPa, the solvent-waste weight ratio being more than 1.0, the liquid fraction, as obtained from the new batch of wastes, with the boiling temperature below 220°C is subjected to catalytic reforming, a part of the liquid fraction from the new batch of wastes, as subjected to catalytic reforming, with the boiling temperature below 220°C is used as the target product, and the remaining part of the liquid fraction, as subjected to catalytic reforming, with the boiling temperature below 220°C is used as a solvent and once again returned for thermal liquefaction of a new batch of wastes, the process is continued in the said conditions of thermal liquefaction and catalytic reforming for the next and subsequent batches of wastes, while a part of the liquid fraction, as subjected to catalytic reforming, with the boiling temperature below 220°C being once again returned for thermal liquefaction of subsequent batches of wastes.

2. The method according to Claim 1, **characterized in that** at the start-up alkyl benzene and/or the gasoline fraction having a boiling temperature below 220°C is used as an organic solvent.

3. The method according to Claim 1, **characterized in that** a part of the liquid fraction, as subjected to catalytic reforming, with the boiling temperature below 220°C is returned for thermal liquefaction of a new batch of wastes at a pressure in the range from at least 2.9 MPa to not more than 5 MPa, the solvent-waste weight ratio being in the range from more than 1.0 to not more than 3.0.
